# EUROPEAN PATENT APPLICATION

(11) **EP 4 567 482 A1**
(43) Date of publication of application: **11.06.2025**
(21) Application number: 23849882.8
(22) Date of filing: 18.07.2023
(51) Int. Cl.: G02B 6/38, G02B 6/02, G02B 6/024, G02B 6/40

(54) **OPTICAL CONNECTOR, OPTICAL COUPLING STRUCTURE, AND METHOD FOR PRODUCING OPTICAL CONNECTOR**

(30) Priority: 03.08.2022 JP 2022123798
(71) Applicant: SUMITOMO ELECTRIC INDUSTRIES, LTD., Osaka-shi, Osaka 541-0041 (JP)
(72) Inventor: MORISHIMA, Tetsu, Osaka-shi, Osaka 541-0041 (JP)
(74) Representative: TBK
(86) International application number: PCT/JP2023/026260
(87) International publication number: WO 2024/029324

(57) **Abstract**

An optical connector (1) according to the present disclosure comprises: a ferrule (20) which has a front end (21) and a rear end (22) that are opposite from each other in one direction and which has a boot insertion hole (24) that is formed at the rear end (22) and a plurality of fiber holding holes (25) that extend toward the front end from the boot insertion hole (24); a boot (30) which has a through hole (31) passing therethrough in the one direction and which is inserted into the boot insertion hole (24) from the rear end (22); and a plurality of optical fibers (10) which each have a core and/or a stress-imparting part at a position offset from the central axis thereof, which are inserted into the through hole (31) in the one direction, and which are respectively held by the plurality of fiber holding holes (25). An adhesive (A) which fixes the plurality of optical fibers (10) to the ferrule (20) is provided to the inside of the ferrule (20) between the boot (30) and the front end (21). Provided to the boot (30) is a seal member (35) which is disposed so as to close a gap between the inner surface of the through hole (31) and the plurality of optical fibers (10) as viewed along the one direction.

## Description

### TECHNICAL FIELD

The present disclosure relates to an optical connector, an optical coupling structure, and a method of manufacturing an optical connector. This application claims priority to Japanese Patent Application No. 2022-123798 filed on August 3, 2022, the entire contents of which are incorporated herein by reference.

### BACKGROUND ART

Patent literature 1 discloses an optical connector in which a plurality of optical fibers are inserted inside a ferrule via a boot. The boot is a cylindrical body having a through hole through which a plurality of optical fibers pass. The boot is used to protect a plurality of optical fibers. The plurality of optical fibers are inserted into the inside of the ferrule through the through hole of the boot. The plurality of optical fibers are fixed to the ferrule with an adhesive injected into the ferrule.

### CITATION LIST

### PATENT LITERATURE

Patent literature 1: Japanese Unexamined Patent Application Publication No. 2020-101613

### SUMMARY OF INVENTION

An optical connector according to an embodiment of the present disclosure includes a ferrule having a front end and a rear end facing each other in one direction, a boot insertion hole formed in the rear end, and a plurality of fiber holding holes each extending from the boot insertion hole toward the front end, a boot having a through hole extending through the boot in the one direction, the boot being inserted into the boot insertion hole from the rear end, and a plurality of optical fibers each including at least one of a core and a stress application portion at a position shifted from a center axis of the optical fiber, the plurality of optical fibers being inserted into the through hole in the one direction and each held in a corresponding one of the plurality of fiber holding holes. An adhesive is provided inside the ferrule between the boot and the front end to fix the plurality of optical fibers to the ferrule. The boot is provided with a seal member disposed such that the seal member closes a gap between an inner surface of the through hole and the plurality of optical fibers when viewed in the one direction.

### BRIEF DESCRIPTION OF THE DRAWINGS

FIG. 1 is a perspective view of an optical connector according to a first embodiment.
FIG. 2 is a cross-sectional view of the optical connector of FIG. 1.
FIG. 3 is a cross-sectional view of the optical connector taken along line **III-III** of FIG. 2.
FIG. 4 is a perspective view of an optical coupling structure comprising the optical connector of FIG. 1.
FIG. 5 is a plan view showing a manufacturing step of the optical connector of FIG. 1.
FIG. 6 is a plan view showing a manufacturing step subsequent to that of FIG. 5.
FIG. 7 is a cross-sectional view showing a manufacturing step subsequent to that of FIG. 6.
FIG. 8 is a cross-sectional view showing a manufacturing step subsequent to that of FIG. 7.
FIG. 9 is a cross-sectional view of an optical connector according to a comparative example.
FIG. 10 is a cross-sectional view of the optical connector taken along line X-X of FIG. 9.
FIG. 11 is a cross-sectional view of the optical connector according to a second embodiment.
FIG. 12 is a cross-sectional view of the optical connector taken along line XII-XII of FIG. 11.
FIG. 13 is a plan view showing a manufacturing step of the optical connector of FIG. 11.
FIG. 14 is a cross-sectional view showing a manufacturing step subsequent to that of FIG. 13.
FIG. 15 is a cross-sectional view showing a manufacturing step subsequent to that of FIG. 14.
FIG. 16 is a cross-sectional view showing a manufacturing step subsequent to that of FIG. 15.
FIG. 17 is a cross-sectional view of an optical connector according to a modification of a first embodiment.
FIG. 18 is a perspective view of an optical-fiber holding member provided in the optical connector of FIG. 17.
FIG. 19 is a cross-sectional view of an optical connector according to another modification of the first embodiment.
FIG. 20 is a perspective view of an optical-fiber holding member provided in the optical connector of FIG. 19.
FIG. 21 is a cross-sectional view of an optical connector according to another modification of the first embodiment.
FIG. 22 is a perspective view of an optical-fiber holding member provided in the optical connector of FIG. 21.
FIG. 23 is a cross-sectional view showing a modification of the optical-fiber holding member.
FIG. 24 is a cross-sectional view showing another modification of the optical-fiber holding member.
FIG. 25 is a cross-sectional view of an optical connector according to a modification of the second embodiment.

### DETAILED DESCRIPTION

### [Problems to be Solved by Present Disclosure]

When a plurality of optical fibers requiring rotational alignment are mounted on the ferrule described in Patent Literature 1, the plurality of optical fibers are rotationally aligned in a separated state, and then each optical fiber is inserted into the inside of the ferrule through the through hole of the boot and fixed to the ferrule with an adhesive injected into the inside of the ferrule. When the plurality of optical fibers are inserted into the through hole of the boot in a state of being separated from each other, the optical fibers are likely to overlap each other. When such an overlap between the optical fibers occurs, the adhesive injected into the inside of the ferrule is likely to leak to the outside of the ferrule along the optical fiber. When the adhesive leaking to the outside is cured in a state of being attached to the optical fiber, the flexibility of the optical fiber is lost, and the bending resistance of the optical fiber may be reduced.

### [Advantageous Effects of Present Disclosure]

According to the optical connector, the optical coupling structure, and the method of manufacturing an optical connector according to the present disclosure, it is possible to suppress a decrease in bending resistance of an optical fiber.

### [Description of Embodiments of Present Disclosure]

First, the contents of embodiments of the present disclosure will be listed and explained.
(1) An optical connector according to an embodiment of the present disclosure includes a ferrule having a front end and a rear end facing each other in one direction, a boot insertion hole formed in the rear end, and a plurality of fiber holding holes each extending from the boot insertion hole toward the front end, a boot having a through hole extending through the boot in the one direction, the boot being inserted into the boot insertion hole from the rear end, and a plurality of optical fibers each including at least one of a core and a stress application portion at a position shifted from a center axis of the optical fiber, the plurality of optical fibers being inserted into the through hole in the one direction and each held in a corresponding one of the plurality of fiber holding holes. An adhesive is provided inside the ferrule between the boot and the front end to fix the plurality of optical fibers to the ferrule. The boot is provided with a seal member disposed such that the seal member closes a gap between an inner surface of the through hole and the plurality of optical fibers when viewed in the one direction.
   **In** this optical connector, the plurality of optical fibers are inserted into the through hole of the boot which is inserted into the boot insertion hole of the ferrule, and are held in the plurality of fiber holding holes of the ferrule, respectively. The boot is provided with a seal member disposed such that the seal member closes a gap between an inner surface of the through hole and the plurality of optical fibers when viewed in the one direction. Thus, when the adhesive is injected into the inside of the ferrule between the boot and the front end of the ferrule, it is possible to suppress a situation in which the adhesive leaks to the outside of the ferrule through the gap between the inner surface of the through hole and the plurality of optical fibers. With the configuration in which such a seal member is provided, even when the optical fibers overlap each other, the seal member can prevent the adhesive from flowing out to the outside of the ferrule. This can prevent the adhesive leaking to the outside of the ferrule from being cured while adhering to the optical fiber. As a result, it is possible to suppress a decrease in the bending resistance of the optical fiber due to the curing of the leaked adhesive.
(2) In the optical connector described in the above (1), the seal member may be disposed inside the through hole, the seal member being disposed to cover the plurality of optical fibers. In this case, the plurality of optical fibers are inserted into the through hole in a state where the plurality of optical fibers are covered with the seal member, and thus the seal member can be disposed so as to close the gap between the inner surface of the through hole and the plurality of optical fibers. Thus, when the plurality of optical fibers are covered with the seal member before the plurality of optical fibers are inserted into the through hole, the plurality of optical fibers can be inserted into the through hole in a state where the plurality of optical fibers are aligned by rotational alignment. In this case, the insertion of the plurality of optical fibers into the ferrule can be performed more easily than in the case where the plurality of optical fibers are inserted into the through hole in a state of being separated into single cores for the rotational alignment.
(3) In the optical connector described in the above (1), the seal member may be provided at a rear surface of the boot, the rear surface facing a side opposite to a side of the plurality of fiber holding holes in the one direction, the seal member being disposed to close an opening of the through hole formed in the rear surface. In this case, after the plurality of optical fibers are inserted into the through hole of the boot, a simple operation of applying a material of the seal member so as to close the opening of the rear surface of the boot is performed, and thus the seal member that closes the gap between the inner surface of the through hole and the plurality of optical fibers can be easily formed.
(4) In the optical connector described in any one of the above (1) to (3), the seal member may be made of a material differing from a material of the adhesive. As the material of the adhesive, a relatively hard material is suitable for fixing the plurality of optical fibers to the ferrule. On the other hand, as a material of the seal member provided in the boot, a relatively soft material is suitable in order to obtain bending resistance of the optical fiber. Thus, by using a material different from the material of the adhesive as the material of the seal member in consideration of the difference in use, it is possible to select a material of a type suitable for the seal member.
(5) In the optical connector described in any one of the above (1) to (4), each of the plurality of optical fibers may include a coated portion covered by a coat. The coated portion of each of the plurality of optical fibers may extend at an outside of the ferrule opposite to an inside of the ferrule with respect to the seal member in the one direction, and may be covered by a resin layer at the outside. As described above, the coated portions of the plurality of optical fibers extending to the outside are covered with the resin layer, and thus it is possible to protect the coated portions of the plurality of fibers exposed to the outside from external force.
(6) The optical connector described in any one of the above (1) to (5) may further include an optical-fiber holding member disposed, inside the ferrule, between the boot and the plurality of fiber holding holes, the optical-fiber holding member being configured to hold the plurality of optical fibers. When such an optical-fiber holding member is disposed inside the ferrule, the insertion of the plurality of optical fibers into the ferrule is facilitated.
(7) In the optical connector described in the above (6), each of the plurality of optical fibers may include a coated portion covered by a coat. The optical-fiber holding member may be a resin layer disposed to cover the coated portion of each of the plurality of optical fibers. In this case, the coated portions of the plurality of optical fibers are covered with the resin layer, and thus it is possible to obtain bending resistance of each optical fiber.
(8) In the optical connector described in the above (6), each of the plurality of optical fibers may include a coat removed portion from which a coat having a predetermined length from a distal end surface is removed. The optical-fiber holding member may be a resin layer disposed to cover the coat removed portion of each of the plurality of optical fibers. In this case, the coat removed portions of the plurality of optical fibers are covered with the resin layer, and thus it is possible to obtain bending resistance of each optical fiber.
(9) In the optical connector described in the above (6), the optical-fiber holding member may have a plurality of V-shaped grooves each extending in the one direction. A corresponding one of the plurality of optical fibers may be accommodated in each of the plurality of V-shaped grooves. In this case, the plurality of optical fibers are accommodated in the plurality of V-shaped grooves of the optical-fiber holding member respectively, and therefore the positions and the rotation angles of the plurality of optical fibers with respect to the ferrule can be defined with high accuracy.
(10) In the optical connector described in the above (6), the optical-fiber holding member may have a plurality of fiber through holes each extending through the optical-fiber holding member in the one direction. A corresponding one of the plurality of optical fibers may be inserted into each of the plurality of fiber through holes. In this case, by inserting the plurality of optical fibers into the plurality of fiber through holes of the optical-fiber holding member respectively, the positions and the rotation angles of the plurality of optical fibers with respect to the ferrule can be defined with high accuracy.
(11) In the optical connector described in any one of the above (1) to (10), the optical fibers may be any one of a multi core fiber, a polarization maintaining fiber, and a bundle fiber. When optical fibers requiring such rotational alignment are used, the optical fibers are likely to overlap each other. In contrast, in the optical connector described above, even when the optical fibers overlap each other, the adhesive can be prevented from leaking to the outside of the ferrule. This can suppress the occurrence of a situation in which the bending resistance of the optical fiber is reduced due to the curing of the leaked adhesive.
(12) An optical coupling structure according to an embodiment of the present disclosure includes as the optical connector described in any one of the above (1) to (11), a first optical connector and a second optical connector. The first optical connector is disposed to face the second optical connector in the one direction and is optically coupled to the second optical connector. Since the optical coupling structure includes the first optical connector and the second optical connector as the optical connectors described above, it is possible to suppress a situation in which the bending resistance of the optical fiber is reduced as described above.
(13) A method of manufacturing an optical connector according to an embodiment of the present disclosure, the method includes: preparing a ferrule, a boot, and a plurality of optical fibers, the ferrule having a front end and a rear end facing each other in one direction, a boot insertion hole formed in the rear end, and a plurality of fiber holding holes each extending from the boot insertion hole toward the front end, the boot having a through hole extending through the boot in the one direction, the boot being inserted into the boot insertion hole from the rear end, the plurality of optical fibers each including at least one of a core and a stress application portion at a position shifted from a center axis of the optical fiber; inserting the plurality of optical fibers into the ferrule such that the plurality of optical fibers are inserted into the through hole and are each held in a corresponding one of the plurality of fiber holding holes; forming a seal member disposed such that the seal member closes a gap between an inner surface of the through hole and the plurality of optical fibers when viewed in the one direction; and fixing the plurality of optical fibers to the ferrule by injecting an adhesive into the ferrule between the boot and the front end, the adhesive being disposed to fix the plurality of optical fibers to the ferrule. According to the method of manufacturing the optical connector, the adhesive can be prevented from flowing out to the outside of the ferrule by the seal member, and thus, the adhesive leaking to the outside of the ferrule can be prevented from being cured in a state of being attached to the optical fiber. As a result, it is possible to suppress a decrease in the bending resistance of the optical fiber due to the curing of the leaked adhesive.
(14) In the method of manufacturing the optical connector described in the above (13), inserting of the plurality of optical fibers into the ferrule may be performed after forming of the seal member and before fixing of the plurality of optical fibers to the ferrule. In forming of the seal member, the seal member disposed to cover the plurality of optical fibers may be formed. In inserting of the plurality of optical fibers into the ferrule, the seal member may be disposed inside the through hole when the plurality of optical fibers are to be inserted into the through hole. Thus, when the plurality of optical fibers are covered with the seal member before the plurality of optical fibers are inserted into the through hole, the plurality of optical fibers can be inserted into the through hole in a state of being aligned, and thus, the insertion of the plurality of optical fibers into the ferrule can be easily than in the case where the plurality of optical fibers are inserted into the through hole in a state of being separated into single cores for rotational alignment.
(15) In method of manufacturing the optical connector described in the above (13), forming of the seal member may be performed after inserting of the plurality of optical fibers into the ferrule and before fixing of the plurality of optical fibers to the ferrule. In forming of the seal member, after the plurality of optical fibers are inserted into the through hole, the seal member may be formed with respect to a rear surface of the boot such that the seal member closes an opening of the through hole formed in the rear surface, the rear surface facing a side opposite to a side of the plurality of fiber holding holes in the one direction. In this case, after the plurality of optical fibers are inserted into the through hole of the boot, a simple operation of applying the material of the seal member so as to close the opening of the rear surface of the boot is performed, and thus the seal member that closes the opening of the through hole can be easily formed.

### [Details of Embodiments of Present Disclosure]

Specific examples of an optical connector, an optical coupling structure, and a method of manufacturing an optical connector according to embodiments of the present disclosure will be described below with reference to the drawings. The present disclosure is not limited to these examples, but is defined by the scope of the claims, and is intended to include all modifications within the meaning and scope equivalent to the scope of the claims. In the following description, the same elements are denoted by the same reference numerals in the description of the drawings, and redundant description will be appropriately omitted.

### [First Embodiment]

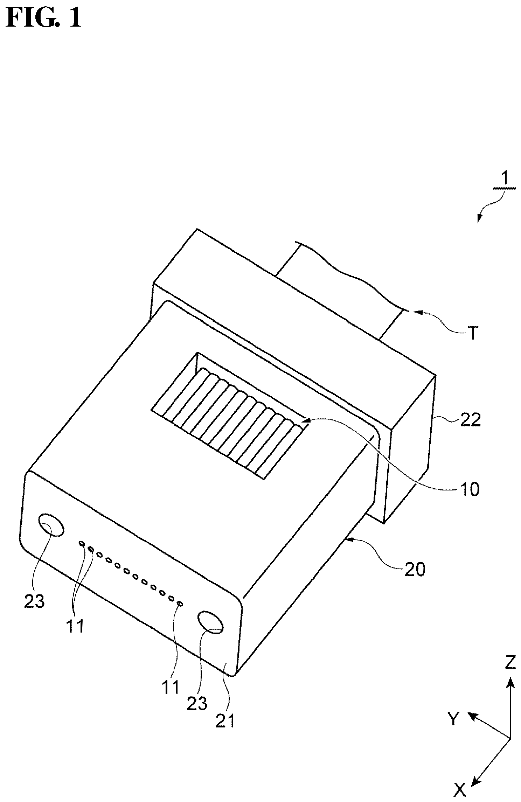

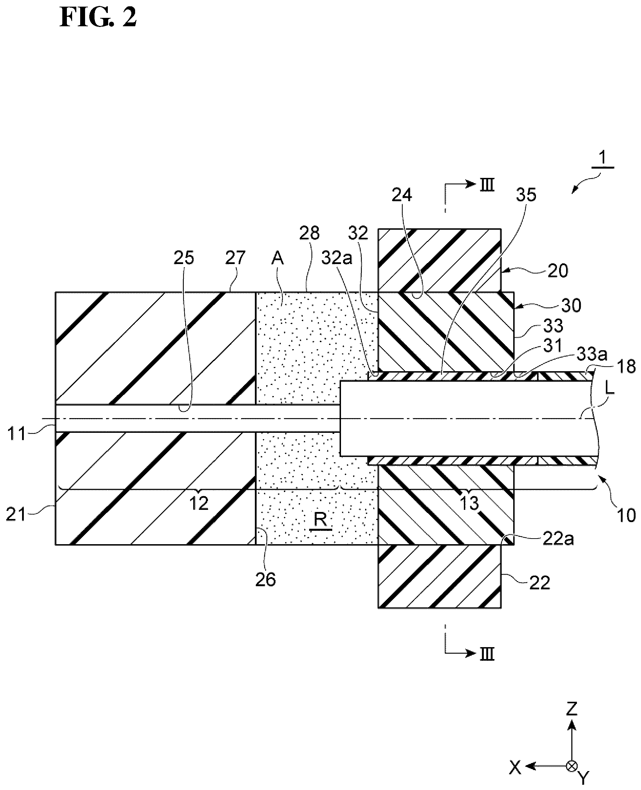

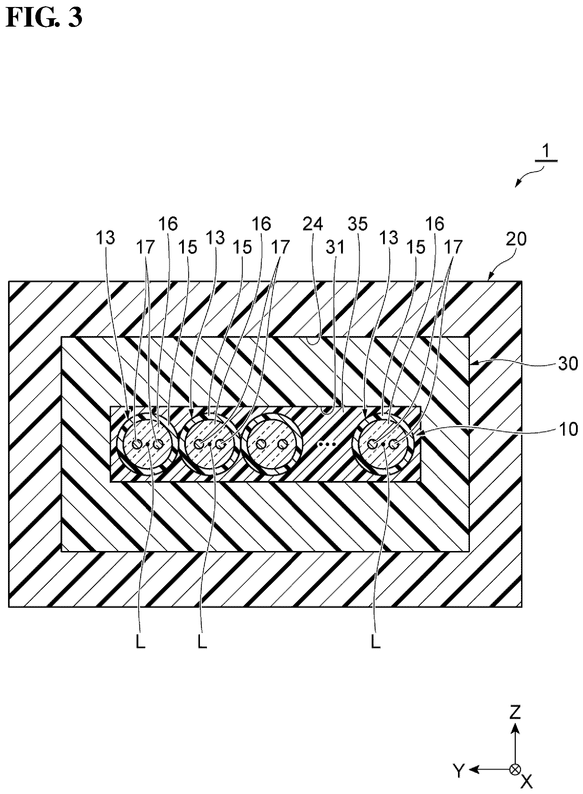

FIG. 1 is a perspective view of an optical connector 1 according to a first embodiment. FIG. 2 is a cross-sectional view of optical connector 1. FIG. 3 is a cross-sectional view of optical connector 1 taken along line III-III of FIG. 2. In the following description, for convenience of description, a longitudinal direction of optical connector 1 is referred to as an X direction (an example of "one direction"), a lateral direction of optical connector 1 is referred to as a Y direction, and a height direction of optical connector 1 is referred to as a Z direction. The X direction, the Y direction, and the Z direction intersect (in one example, are orthogonal to) each other. In the following description, one side in the Z direction may be referred to as "upper", the other side in the Z direction may be referred to as "lower", one side in the X direction may be referred to as "front", and the other side in the X direction may be referred to as "rear".

As shown in FIGS. 1, 2, and 3, optical connector 1 includes, for example, a tape fiber T, a ferrule 20, and a boot 30. Tape fiber T includes a plurality of optical fibers 10 extending in the X direction and arranged in the Y direction. Each of the plurality of optical fibers 10 is a cable that transmits an optical signal. In the present embodiment, a case where twelve optical fibers 10 are arranged in a row in the Y direction is exemplified. However, the number of the plurality of optical fibers 10 is not limited to 12, and may be another number such as 4, 8, or 24. The plurality of optical fibers 10 may be arranged in two or more rows.

As shown in FIG. 2, each optical fiber 10 has a distal end surface 11, a coat removed portion 12, and a coated portion 13. Distal end surface 11 is an end surface positioned at the tip of optical fiber 10 in the X direction. Coat removed portion 12 is a portion of optical fiber 10 where a resin coat 15 (an example of a "coat", see FIG. 3) is removed, and resin coat 15 has a predetermined length from distal end surface 11. Coated portion 13 is a portion of optical fiber 10 where resin coat 15 remains. Coated portion 13 is provided on the opposite side of distal end surface 11 with coat removed portion 12 interposed therebetween. In coat removed portion 12, a cladding 16 (see FIG. 3) of optical fiber 10 is exposed. In coated portion 13, cladding 16 of optical fiber 10 is covered with resin coat 15.

Optical fiber 10 is an optical fiber that requires rotational alignment with respect to a center axis L. In the present embodiment, a multi core fiber (MCF) is exemplified as optical fiber 10 that requires rotational alignment. In this case, as shown in FIG. 3, optical fiber 10 has a plurality of cores 17 covered with cladding 16. In the example shown in FIG. 3, two cores 17 are each arranged at positions shifted from center axis L. The state where core 17 is shifted from center axis L may be a state where the center of core 17 does not coincide with center axis L when viewed in the X direction.

The number and arrangement of the plurality of cores 17 are not limited to the example shown in FIG. 3, and can be changed as appropriate. For example, the number of the plurality of cores 17 is not limited to two, and may be four, six, or eight or more. The plurality of cores 17 may have a center core disposed on center axis L. As optical fiber 10 that requires rotational alignment, in addition to the multi-core fiber, for example, a bundle fiber, a polarization maintaining fiber (PMF), or the like are exemplified. When optical fiber 10 is a polarization maintaining fiber, optical fiber 10 has a stress application portion at a position shifted from center axis L. In this case, for example, optical fiber 10 has a core disposed on center axis L, and a pair of stress application portions are disposed on both sides of the core.

Ferrule 20 is a member that holds the end portions of the plurality of optical fibers 10, and is, for example, an MT ferrule. Ferrule 20 has a substantially rectangular parallelepiped appearance. Ferrule 20 is made of a resin such as polyphenylene sulfide (PPS). Ferrule 20 includes, for example, a front end surface 21, a rear end surface 22, a pair of guide holes 23, 23 (see FIG. 1), a boot insertion hole 24, and a plurality of fiber holding holes 25.

Front end surface 21 is an end surface positioned at the front end of ferrule 20 in the X direction. Rear end surface 22 is an end surface positioned at the rear end of ferrule 20 in the X direction. Front end surface 21 and rear end surface 22 extend along the Y direction and the Z direction, and are arranged in the X direction. The pair of guide holes 23, 23 are opened at both ends of front end surface 21 in the Y direction, and extend in the X direction from front end surface 21 toward rear end surface 22 (see FIG. 1). Rear end surface 22 is formed with an opening 22a capable of collectively receiving the plurality of optical fibers 10. That is, opening 22a can receive the plurality of optical fibers 10 in a state where the plurality of optical fibers 10 are integrated into one.

Boot insertion hole 24 is a hole for inserting boot 30, and extends forward from opening 22a of rear end surface 22. A wall surface 26 is formed inside the ferrule between front end surface 21 and rear end surface 22, and boot insertion hole 24 extends in the X direction from opening 22a to wall surface 26. Wall surface 26 may be, for example, a plane along the Y direction and the Z direction. Boot insertion hole 24 has, for example, a rectangular shape when viewed in the X direction. Coated portions 13 of the plurality of optical fibers 10 are collectively inserted into boot insertion hole 24 via boot 30 in the X direction, and thus coated portions 13 of the plurality of optical fibers 10 are integrated into one.

The plurality of fiber holding holes 25 are connected to boot insertion hole 24 in the X direction and extend from boot insertion hole 24 toward front end surface 21 in the X direction. The plurality of fiber holding holes 25 extend through in the X direction from wall surface 26 to front end surface 21, and are open at front end surface 21. The plurality of fiber holding holes 25 are arranged in the Y direction between the pair of guide holes 23, 23 so as to correspond to the plurality of optical fibers 10. Each of the plurality of fiber holding holes 25 has, for example, a circular shape when viewed in the X direction. The inner diameter of each of the plurality of fiber holding holes 25 is set to be the same as the outer diameter of coat removed portion 12 or slightly larger than the outer diameter of coat removed portion 12. Coat removed portions 12 of the plurality of optical fibers 10 are inserted into and held by the plurality of fiber holding holes 25, respectively.

As shown in FIGS. 2 and 3, boot 30 is a cylindrical member having a through hole 31 through which the plurality of optical fibers 10 are passed. Boot 30 is inserted into boot insertion hole 24 from rear end surface 22 in the X direction. Boot 30 has, for example, a rectangular shape when viewed in the X direction, and is fitted into rectangular boot insertion hole 24 without a gap. Boot 30 is fixed to boot insertion hole 24, and a rear end portion of boot 30 slightly protrudes rearward from rear end surface 22.

Boot 30 includes a front surface 32 and a rear surface 33 arranged in the X direction. Front surface 32 is an end surface positioned at a front end (one end) of boot 30 in the X direction. Rear surface 33 is an end surface positioned at a rear end (the other end) of boot 30 in the X direction. In a state in which boot 30 is inserted into boot insertion hole 24, front surface 32 is disposed inside boot insertion hole 24 and faces wall surface 26, in which the plurality of fiber holding holes 25 are formed, in the X direction. Rear surface 33 is disposed outside boot insertion hole 24 and is disposed further back than rear end surface 22. Through hole 31 extends through in the X direction from front surface 32 to rear surface 33. Through hole 31 has, for example, a rectangular shape when viewed in the X direction. An opening 32a and an opening 33a of through hole 31 are formed in front surface 32 and rear surface 33, respectively. Coated portions 13 of the plurality of optical fibers 10 are collectively inserted into through hole 31 in the X direction, and thus coated portions 13 of the plurality of optical fibers 10 are integrated into one.

Boot 30 is formed of an elastic body such as rubber or elastic resin. With this configuration, even when a bending stress is applied to the plurality of optical fibers 10 inserted into boot 30, boot 30 absorbs the bending stress, and thus the plurality of optical fibers 10 are prevented from being sharply bent. This improves the resistance of the plurality of optical fibers 10 to bending. Furthermore, since boot 30 is fitted into boot insertion hole 24 without a gap, an adhesive A injected into an internal space R of ferrule 20 is prevented from leaking to the outside of ferrule 20. As described above, boot 30 has a function of protecting the plurality of optical fibers 10 and a function of preventing adhesive A from leaking.

Internal space R is a space formed inside ferrule 20 between front end surface 21 and boot 30. Internal space R may be a space including, for example, an internal space positioned between front surface 32 and wall surface 26 in boot insertion hole 24 and internal spaces of the plurality of fiber holding holes 25. A window 28 communicating with internal space R is formed in an upper surface 27 of ferrule 20. Upper surface 27 is, for example, a plane along the XY plane, and extends in the X direction between front end surface 21 and rear end surface 22. Window 28 is an introduction hole for introducing adhesive A into internal space R. Adhesive A is used to fix the plurality of optical fibers 10 to ferrule 20, and is made of, for example, a resin material such as a thermosetting resin. Adhesive A is filled in at least a space between front surface 32 and wall surface 26 in internal space R. Adhesive A may be filled inside the plurality of fiber holding holes 25.

In the present embodiment, as shown in FIGS. 2 and 3, a seal member 35 is provided inside through hole 31 of boot 30. Seal member 35 is a resin layer provided to cover coated portions 13 of the plurality of optical fibers 10 collectively, that is, to cover coated portions 13 of the plurality of optical fibers 10 together, inside through hole 31. Seal member 35 is provided to prevent adhesive A injected into internal space R from leaking to the outside of ferrule 20 along the plurality of optical fibers 10 in through hole 31. Seal member 35 has a rectangular tubular shape that fits into through hole 31 in the X direction. The size of seal member 35 in the X direction is set to be the same as the size of through hole 31, for example. Seal member 35 may be in contact with the inner surface of through hole 31 over the entire outer circumference when viewed in the X direction. Seal member 35 is disposed so as to close the gap between the inner surface of through hole 31 and coated portions 13 of the plurality of optical fibers 10 when viewed in the X direction.

The state in which seal member 35 closes the gap between the inner surface of through hole 31 and coated portion 13 includes a state in which seal member 35 seals the gap between the inner surface of through hole 31 and coated portion 13 without a gap and a state in which seal member 35 seals the gap in a liquid-tight manner so that liquid adhesive A injected into internal space R does not flow out to the outside of ferrule 20 through the gap. In a state where seal member 35 seals the gap in a liquid-tight manner, a slight gap that does not allow liquid adhesive A to flow out from internal space R to the outside of ferrule 20 may exist between the inner surface of through hole 31 and coated portion 13.

In the present embodiment, a case where seal member 35 is provided over the entire internal space of through hole 31 in the XZ cross section is exemplified. However, seal member 35 may be provided in a part of the internal space of through hole 31 in the XZ cross section as long as seal member 35 is disposed so as to close the gap between the inner surface and coated portion 13 when viewed in the X direction. Alternatively, seal member 35 may be provided on the outside of through hole 31 (for example, front surface 32 or rear surface 33 of boot 30). In the example shown in FIG. 2, seal member 35 is disposed so as to slightly protrude from through hole 31 in the X direction.

Seal member 35 is made of, for example, the same material as a taping resin 18 constituting tape fiber T. Taping resin 18 is a resin layer that covers coated portions 13 of the plurality of optical fibers 10 collectively, that is, so as to bundle coated portions 13 of the plurality of optical fibers 10 in a row. Taping resin 18 is placed further back than the front ends of coated portions 13 of the plurality of optical fibers 10. Taping resin 18 collectively covers coated portions 13 of the plurality of optical fibers 10 extending rearward from through hole 31 to the outside of ferrule 20 and bundles coated portions 13 in a row. Taping resin 18 integrally holds coated portions 13 of the plurality of optical fibers 10 in order to suppress positional variation among the plurality of optical fibers. In a state where the plurality of optical fibers 10 are held by taping resin 18, the plurality of optical fibers 10 in front of taping resin 18 can be rotationally aligned. In a state where the end portion of optical fiber 10 is inserted into ferrule 20, taping resin 18 is disposed at a position which is spaced apart from rear surface 33 of boot 30 by a predetermined distance in the rear direction. Seal member 35 may be in contact with taping resin 18 in the X direction, or may be separated from taping resin 18. Seal member 35 may bundle coated portions 13 of the plurality of optical fibers 10 in a row, similar to taping resin 18.

As a material of taping resin 18, for example, an adhesive such as an ultraviolet (UV) curable resin, a thermosetting resin, or an anaerobic resin is used. As a material of taping resin 18, a soft and flexible material such as a urethane-based resin, a silicone-based resin, a modified silicone-based resin, or a rubber-based resin is usually used in order to obtain resistance against bending of the plurality of optical fibers 10. On the other hand, as the material of adhesive A, a relatively hard material such as an epoxy resin or an acrylic resin is used in order to fix the plurality of optical fibers 10 to ferrule 20. As the material of seal member 35, the same material as taping resin 18 is used from the viewpoint of ensuring the resistance to bending of the plurality of optical fibers 10, as in the case of taping resin 18. As a result, a material different from adhesive A, specifically, a material softer than adhesive A is used as the material of seal member 35. The material of seal member 35 may be the same material as adhesive A, or may be a material different from taping resin 18 and adhesive A. For example, the material of seal member 35 may be a material different from the material of taping resin 18, among a urethane-based resin, a silicone-based resin, a modified silicone-based resin, and a rubber-based resin.

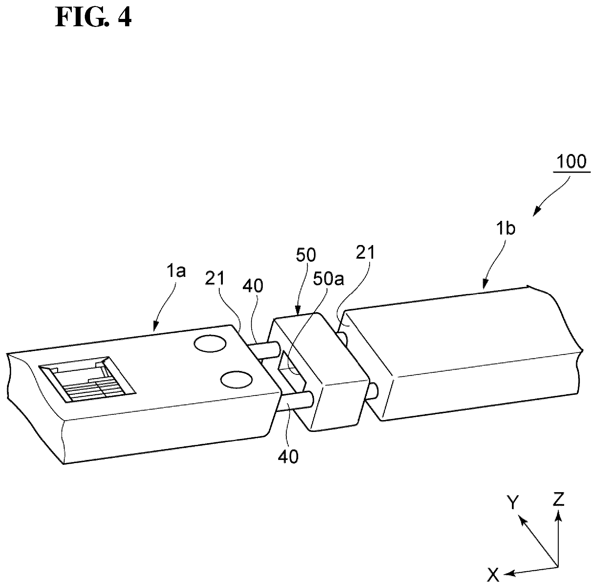

FIG. 4 is a perspective view of an optical coupling structure 100 according to the present embodiment. Optical coupling structure 100 includes, for example, a first optical connector 1a, a second optical connector 1b, a pair of guide pins 40, 40, and a spacer 50. First optical connector 1a and second optical connector 1b have the same configuration as optical connector 1 described above. In optical coupling structure 100, front end surface 21 of first optical connector 1a and front end surface 21 of second optical connector 1b face each other in the X direction with a gap therebetween. The pair of guide pins 40, 40 are fitted into the pair of guide holes 23, 23 of first optical connector 1a and the pair of guide holes 23, 23 of second optical connector 1b. Thus, the positions of first optical connector 1a and second optical connector 1b in the YZ plane are defined.

Spacer 50 is a plate-like member having an opening 50a. Spacer 50 is disposed between front end surface 21 of first optical connector 1a and front end surface 21 of second optical connector 1b. Opening 50a allows a plurality of optical paths extending between first optical connector 1a and second optical connector 1b to pass therethrough. Thus, first optical connector 1a and second optical connector 1b are optically coupled. Spacer 50 abuts against front end surface 21 of first optical connector 1a and front end surface 21 of second optical connector 1b. Thus, a gap between first optical connector 1a and second optical connector 1b in the X direction is defined.

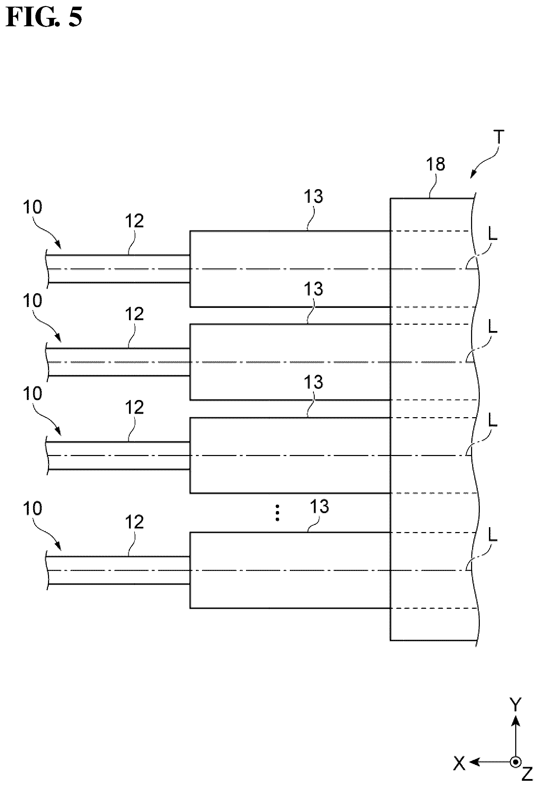

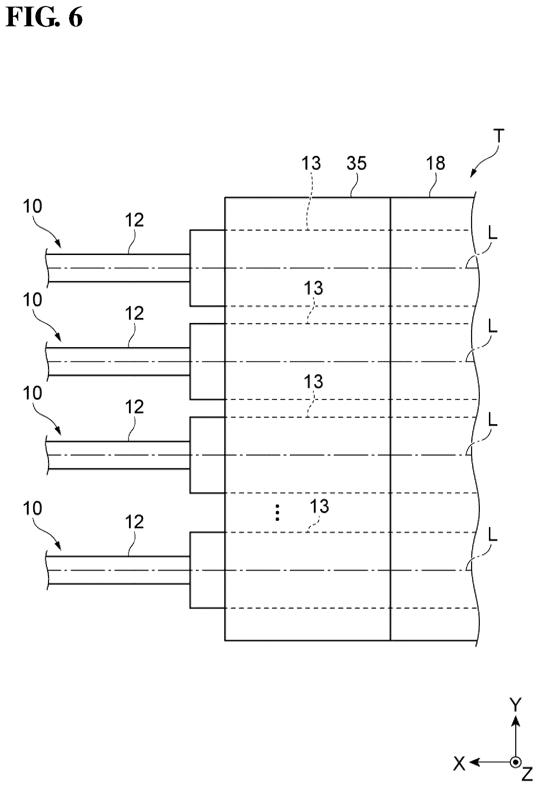

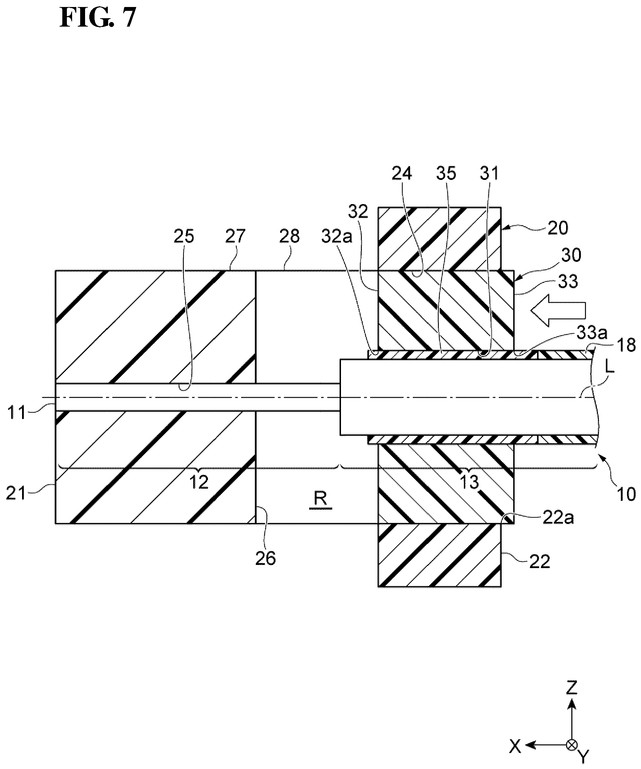

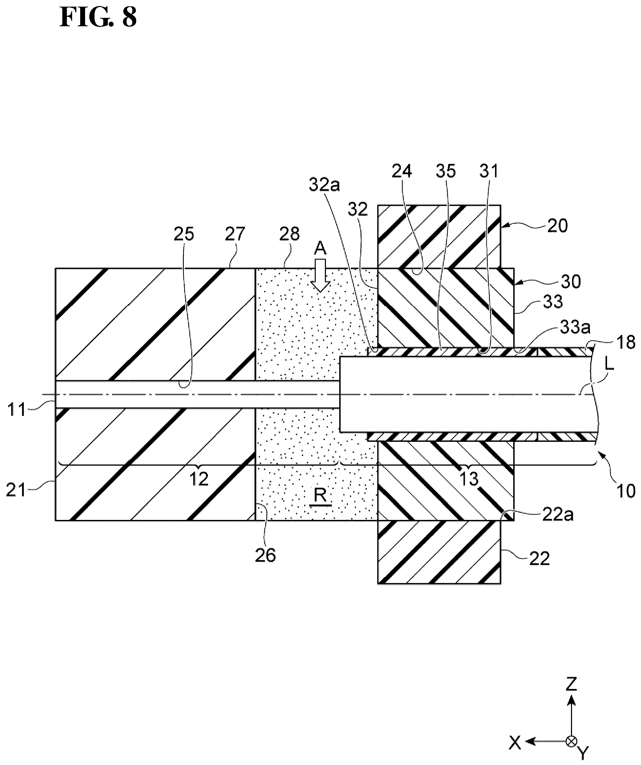

Next, a method of manufacturing optical connector 1 will be described with reference to FIGS. 5, 6, 7, and 8. FIG. 5 is a plan view showing a manufacturing step of optical connector 1. FIG. 6 is a plan view showing a manufacturing step subsequent to that of FIG. 5. FIG. 7 is a cross-sectional view showing a manufacturing step subsequent to that of FIG. 6. FIG. 8 is a cross-sectional view showing a manufacturing step subsequent to that of FIG. 7.

First, the plurality of optical fibers 10, ferrules 20, and boots 30 are prepared. Then, as shown in FIG. 5, in order to rotationally align the plurality of optical fibers 10 included in tape fiber T, the plurality of optical fibers 10 of the portion of tape fiber T to be inserted into ferrule 20 are separated from the tape state into a single core state. At this time, taping resin 18 remains in the rear of coated portions 13 of the plurality of optical fibers 10. In this state, the plurality of optical fibers 10 are each rotationally aligned around center axis L.

Next, as shown in FIG. 6, in a state where the plurality of optical fibers 10 whose rotational alignment has been completed are aligned in a row in the Y direction, a material of seal member 35 is applied so as to cover coated portions 13 of the plurality of optical fibers 10 in front of taping resin 18. In this state, the material of seal member 35 is cured, whereby seal member 35 integrally holding coated portions 13 of the plurality of optical fibers 10 is formed. Thus, the plurality of optical fibers 10 that have been separated into single cores are formed into a tape again by seal member 35. Thus, seal member 35 can be said to be a re-taping resin for re-taping the plurality of optical fibers 10 that have been separated into single cores.

Next, as shown in FIG. 7, the plurality of optical fibers 10 held by seal member 35 are inserted into the inside of ferrule 20 through the through hole 31 of boot 30. At this time, seal member 35 holding coated portions 13 of the plurality of optical fibers 10 is inserted into through hole 31 of boot 30 in the X direction. Coat removed portions 12 of the plurality of optical fibers 10 are inserted into the plurality of fiber holding holes 25 of ferrule 20 in the X direction, respectively. In this state, seal member 35 is disposed so as to close the gap between the inner surface of through hole 31 and the plurality of optical fibers 10 when viewed in the X direction.

Next, as shown in FIG. 8, liquid adhesive A is injected into internal space R of ferrule 20 through window 28 of ferrule 20. At this time, since the inside of through hole 31 is sealed by seal member 35, liquid adhesive A is prevented from leaking to the outside of ferrule 20 along the plurality of optical fibers 10 inserted into through hole 31. Thus, adhesive A is filled in internal space R without flowing out to the rear of seal member 35. In this state, adhesive A is cured, whereby the plurality of optical fibers 10 are fixed to ferrule 20, and optical connector 1 shown in FIG. 2 is obtained.

The effects obtained by optical connector 1, optical coupling structure 100, and the method of manufacturing optical connector 1 according to the present embodiment described above will be described together with the problems of the comparative example.

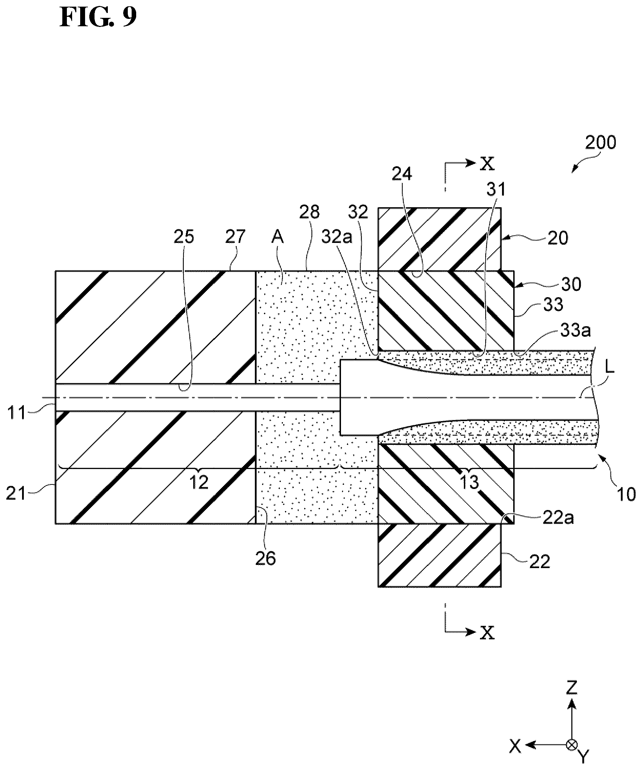

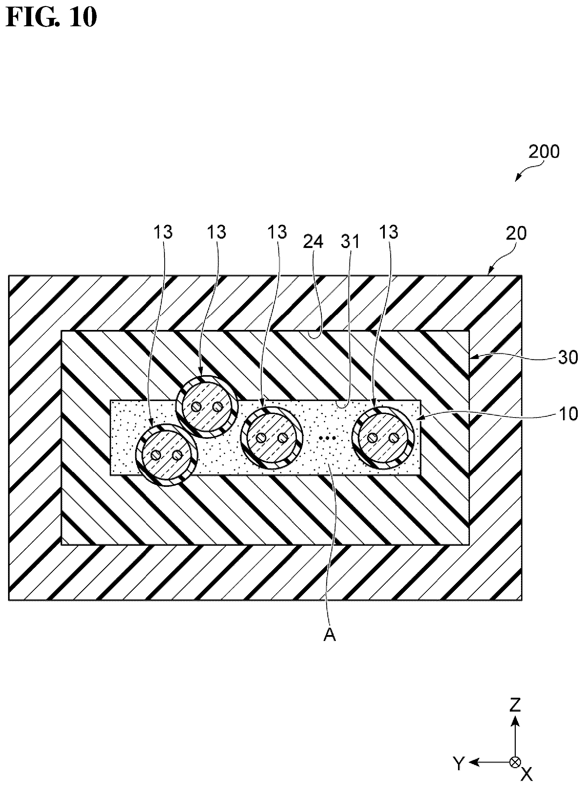

FIG. 9 is a cross-sectional view of an optical connector 200 according to a comparative example. FIG. 10 is a cross-sectional view of optical connector 200 taken along line X-X of FIG. 9. Optical connector 200 does not include seal member 35, unlike optical connector 1 according to the present embodiment. In this case, the plurality of optical fibers 10 are inserted into the inside of ferrule 20 through the through hole 31 of boot 30 in a state of being separated into single cores for rotational alignment. When the plurality of optical fibers 10 are inserted into through hole 31 in a separated state, it is difficult to maintain a state in which the plurality of optical fibers 10 are precisely arranged in the Y direction inside through hole 31. Thus, as shown in FIG. 10, optical fibers 10 are likely to overlap each other.

When optical fibers 10 overlap each other, a gap is likely to be formed between the inner surface of through hole 31 and optical fiber 10. In this case, when liquid adhesive A is injected into the inside of ferrule 20, adhesive A is likely to leak from the gap to the outside of ferrule 20 along optical fiber 10. When adhesive A leaking to the outside of ferrule 20 is cured in a state of being attached to optical fiber 10, the flexibility of optical fiber 10 is lost, and the resistance of optical fiber 10 to bending may be reduced. As a result, when a bending stress is applied to optical fiber 10, there is a possibility that a problem such as easy disconnection of optical fiber 10 may occur.

In contrast, in the present embodiment, as shown in FIGS. 2 and 3, boot 30 is provided with seal member 35 disposed such that seal member 35 closes the gap between the inner surface of through hole 31 and the plurality of optical fibers 10 when viewed in the X direction. Thus, when liquid adhesive A is injected into internal space R of ferrule 20, it is possible to suppress a situation in which adhesive A leaks to the outside of ferrule 20 through the gap between the inner surface of through hole 31 and the plurality of optical fibers 10. With the configuration in which seal member 35 is provided, seal member 35 can prevent adhesive A from flowing out to the outside of ferrule 20. This can prevent adhesive A leaking to the outside of ferrule 20 from being cured while adhering to optical fiber 10. As a result, it is possible to suppress a decrease in the bending resistance of optical fiber 10 due to the curing of leaked adhesive A.

As in the present embodiment, seal member 35 may be disposed inside through hole 31, and may collectively cover the plurality of optical fibers 10. **In** this case, the plurality of optical fibers 10 are inserted into through hole 31 in a state where the plurality of optical fibers 10 are collectively covered with seal member 35, and thus seal member 35 can be disposed so as to close the gap between the inner surface of through hole 31 and the plurality of optical fibers 10. Thus, when the plurality of optical fibers 10 are collectively covered with seal member 35 before the plurality of optical fibers 10 are inserted into through hole 31, the plurality of optical fibers 10 which are rotationally aligned can be collectively inserted into through hole 31 in an aligned state. In this case, the insertion of the plurality of optical fibers 10 into ferrule 20 can be performed more easily than in the case where the plurality of optical fibers 10 are inserted into through hole 31 in a state of being separated into single cores for rotational alignment. Further, when the plurality of optical fibers 10 are aligned using seal member 35, the plurality of optical fibers 10 can be arranged so as not to overlap each other inside through hole 31. This makes it possible to more reliably suppress the situation where adhesive A leaks out to the outside of ferrule 20 from the gap formed between the plurality of optical fibers 10.

As in the present embodiment, seal member 35 may be made of a material differing from a material of adhesive A. As a material of adhesive A, a relatively hard material is suitable for fixing the plurality of optical fibers 10 to ferrule 20. On the other hand, as a material of seal member 35 provided in boot 30, a relatively soft material is suitable in order to secure bending resistance of optical fiber 10. Thus, by using a material different from the material of adhesive A as the material of seal member 35 in consideration of the difference in use, it is possible to select a material of a type suitable for seal member 35.

As in the present embodiment, coated portions 13 of each of the plurality of optical fibers 10 may extend at the outside of ferrule 20 opposite to internal space R with respect to seal member 35 in the X direction and may be collectively covered by taping resin 18 on the outside. As described above, coated portions 13 of the plurality of optical fibers 10 extending to the outside are collectively covered with taping resin 18, and thus it is possible to protect coated portions 13 of the plurality of fibers exposed to the outside from external force.

As in the present embodiment, each of optical fibers 10 may be any one of a multi-core fiber, a polarization maintaining fiber, and a bundle fiber. When optical fibers 10 requiring such rotational alignment are used, optical fibers 10 are likely to overlap each other. In contrast, in the optical connector described above, even when optical fibers 10 overlap each other, leaking of adhesive A to the outside of ferrule 20 is suppressed. This can suppress the occurrence of a situation in which the bending resistance of optical fiber 10 is reduced due to the curing of leaked adhesive A.

### [Second Embodiment]

Next, an optical connector 1A according to the second embodiment will be described. In the following description of the second embodiment, the description of the same parts as those of the first embodiment will be omitted as appropriate, and parts different from those of the first embodiment will be mainly described.

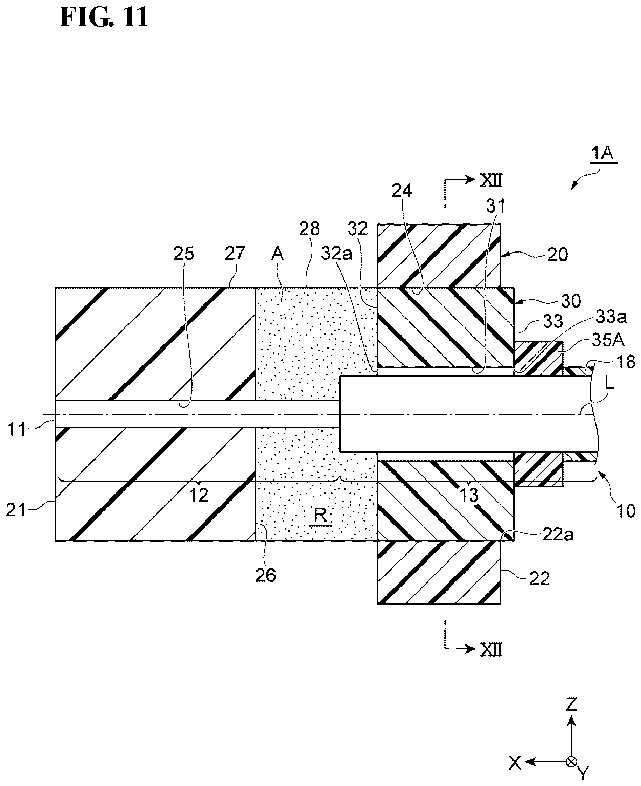

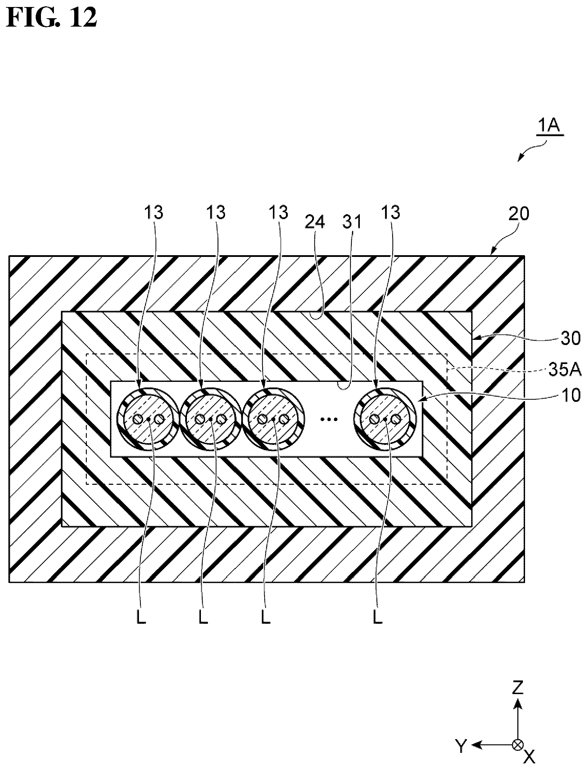

FIG. 11 is a cross-sectional view of optical connector 1A according to the second embodiment. FIG. 12 is a cross-sectional view of optical connector 1A taken along line XII-XII of FIG. 11. In optical connector 1A according to the second embodiment, unlike optical connector 1 according to the first embodiment, a seal member 35A is not disposed inside through hole 31 of boot 30, but is disposed outside through hole 31. Specifically, seal member 35A is provided on rear surface 33 of boot 30 and is disposed so as to close opening 33a formed in rear surface 33. Seal member 35A being disposed so as to close opening 33a means a state in which seal member 35A covers opening 33a so as to fill the gap between the outer edge of opening 33a and coated portions 13 of the plurality of optical fibers 10 when viewed in the X direction. As a result, seal member 35A is disposed so as to close the gap between the inner surface of through hole 31 and coated portions 13 of the plurality of optical fibers 10 when viewed in the X direction.

In FIG. 12, the outer edge of seal member 35A is shown by a dotted line. As shown in FIG. 12, seal member 35A has a size that encompasses through hole 31 of boot 30 when viewed in the X direction. Seal member 35A viewed in the X direction may be larger than through hole 31 and smaller than boot 30. Seal member 35A viewed in the X direction may have a size that encompasses taping resin 18. Seal member 35A is in contact with rear surface 33 and has a predetermined thickness in the X direction from rear surface 33. Seal member 35A is disposed between rear surface 33 and taping resin 18 in the X direction, for example. In this case, seal member 35A may be in contact with rear surface 33 and taping resin 18 in the X direction. Seal member 35A may be disposed so as to cover taping resin 18. In this case, seal member 35A may be in contact with the outer circumferential surface of taping resin 18.

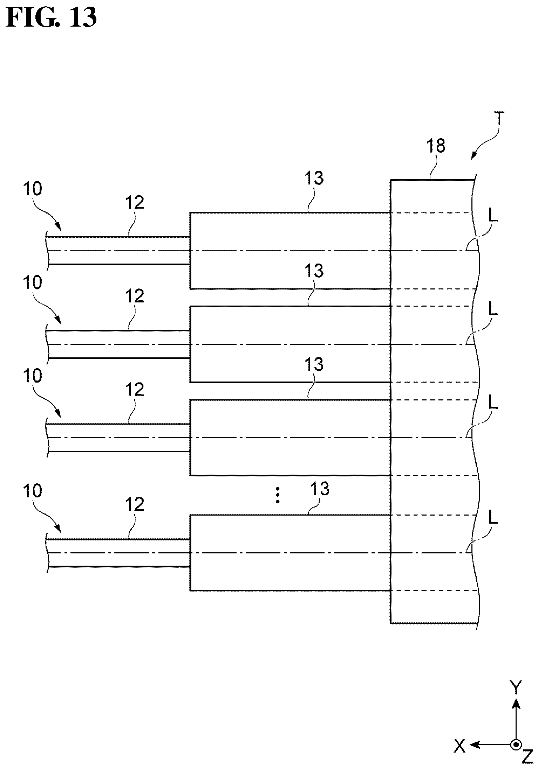

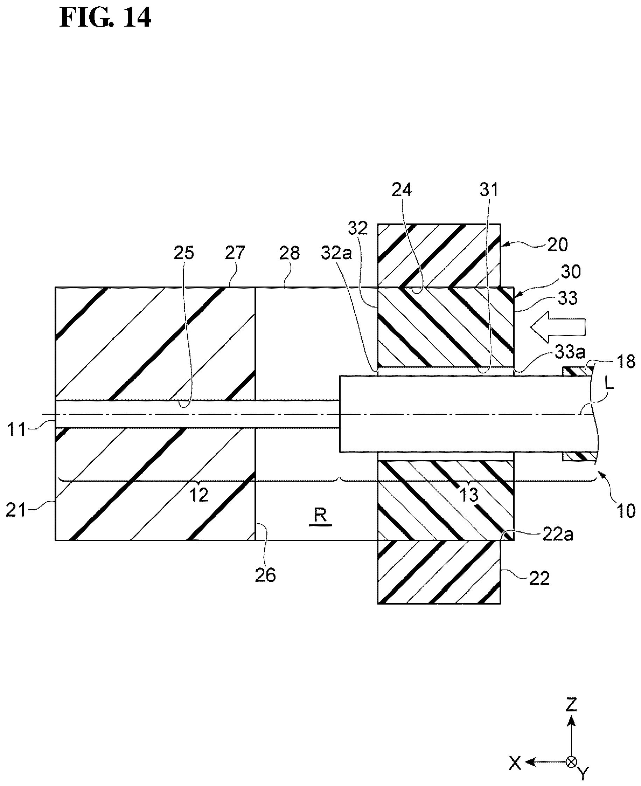

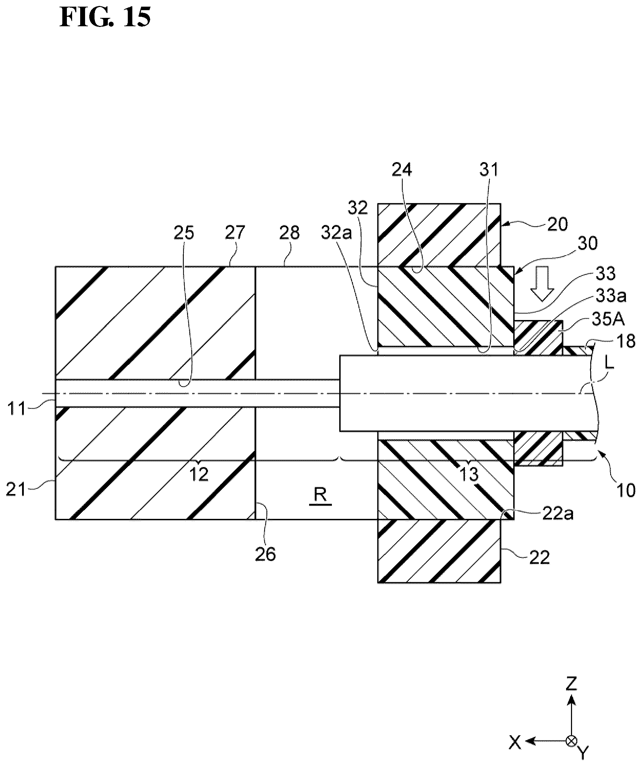

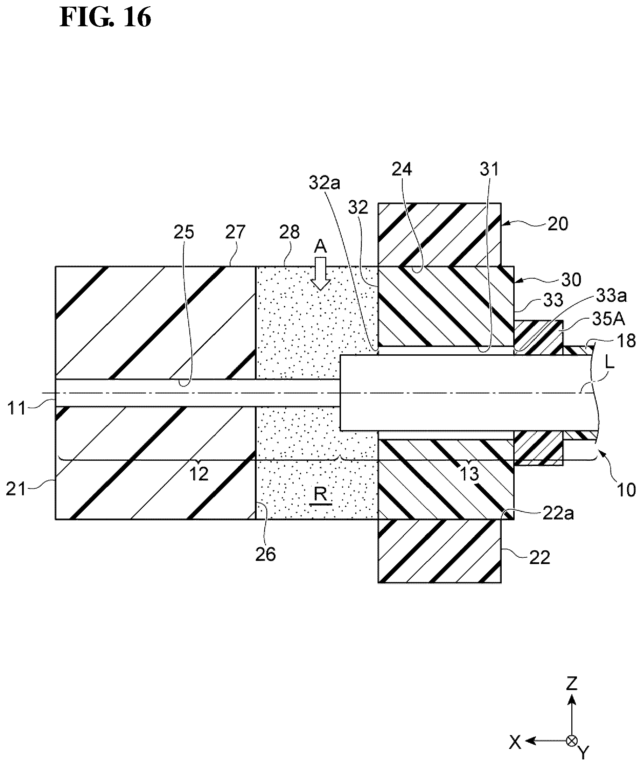

Next, a method of manufacturing optical connector 1A will be described with reference to FIGS. 13, 14, 15, and 16. FIG. 13 is a plan view showing a manufacturing step of optical connector 1A. FIG. 14 is a cross-sectional view showing a manufacturing step subsequent to that of FIG. 13. FIG. 15 is a cross-sectional view showing a manufacturing step subsequent to that of FIG. 14. FIG. 16 is a cross-sectional view showing a manufacturing step subsequent to that of FIG. 15.

First, as shown in FIG. 13, in order to rotationally align the plurality of optical fibers 10 included in tape fiber T, the plurality of optical fibers 10 of the portion of tape fiber T to be inserted into ferrule 20 are separated from the tape state into a single core state. At this time, taping resin 18 remains in the rear of coated portions 13 of the plurality of optical fibers 10. In this state, the plurality of optical fibers 10 are each rotationally aligned around center axis L.

Next, as shown in FIG. 14, the plurality of optical fibers 10 in a state of being separated into single cores are inserted into the inside of ferrule 20 through the through hole 31 of boot 30. At this time, coated portions 13 of the plurality of optical fibers 10 are inserted into through holes 31 of boot 30 in the X direction, and coat removed portions 12 of the plurality of optical fibers 10 are inserted into the plurality of fiber holding holes 25 of ferrule 20 in the X direction respectively. In this state, taping resin 18 is disposed on the outside of through hole 31.

Next, as shown in FIG. 15, the material of seal member 35A is applied around the plurality of optical fibers 10 so as to close openings 33a of rear surface 33 of boot 30. The material of seal member 35A is cured in a state where the material of seal member 35A closes opening 33a, and thus seal member 35A is formed which is disposed so as to close the gap between the inner surface of through hole 31 and the plurality of optical fibers 10 when viewed in the X direction.

Next, as shown in FIG. 16, liquid adhesive A is injected into internal space R of ferrule 20 through window 28 of ferrule 20. At this time, since opening 33a of through hole 31 is sealed by seal member 35A, liquid adhesive A is prevented from leaking to the outside of ferrule 20 along the plurality of optical fibers 10 inserted into through hole 31. Thus, adhesive A is filled in internal space R without flowing out to the rear of seal member 35A. In this state, adhesive A is cured, whereby the plurality of optical fibers 10 are fixed to ferrule 20, and optical connector 1A shown in FIG. 11 is obtained.

According to optical connector 1A of the present embodiment, even when optical fibers 10 overlap each other, seal member 35A can prevent adhesive A from flowing out to the outside of ferrule 20. This suppresses the situation where adhesive A leaking to the outside of ferrule 20 is cured while adhering to optical fiber 10. As a result, it is possible to suppress a decrease in the bending resistance of optical fiber 10 due to the curing of leaked adhesive A.

As in the present embodiment, seal member 35A may close opening 33a formed in rear surface 33 of boot 30. In this case, after the plurality of optical fibers 10 are inserted into through hole 31 of boot 30, a simple operation of applying the material of seal member 35A so as to close opening 33a of rear surface 33 of boot 30 is performed, and thus seal member 35A disposed so as to close the gap between the inner surface of through hole 31 and the plurality of optical fibers 10 can be easily formed.

In the present embodiment, seal member 35A may be formed on front surface 32 of boot 30, instead of rear surface 33 of boot 30. In this case, seal member 35A is disposed on front surface 32 so as to close opening 32a formed in front surface 32. Even in such a form, seal member 35A can prevent adhesive A from flowing out to the outside of ferrule 20, and thus the same effect as the above-described effect can be obtained.

The present disclosure is not limited to the above-described embodiments, and can be appropriately modified without departing from the scope of the claims.

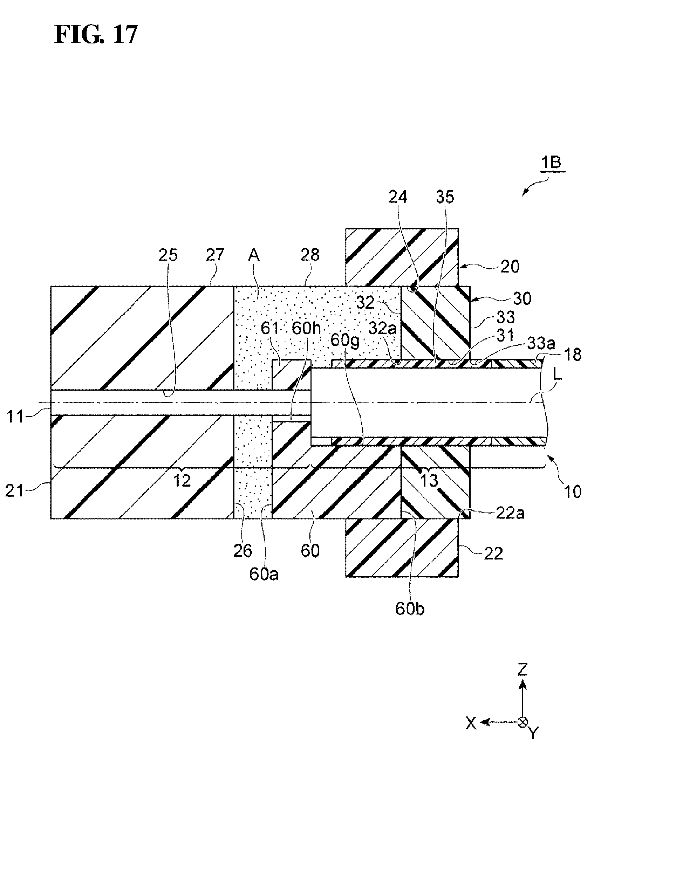

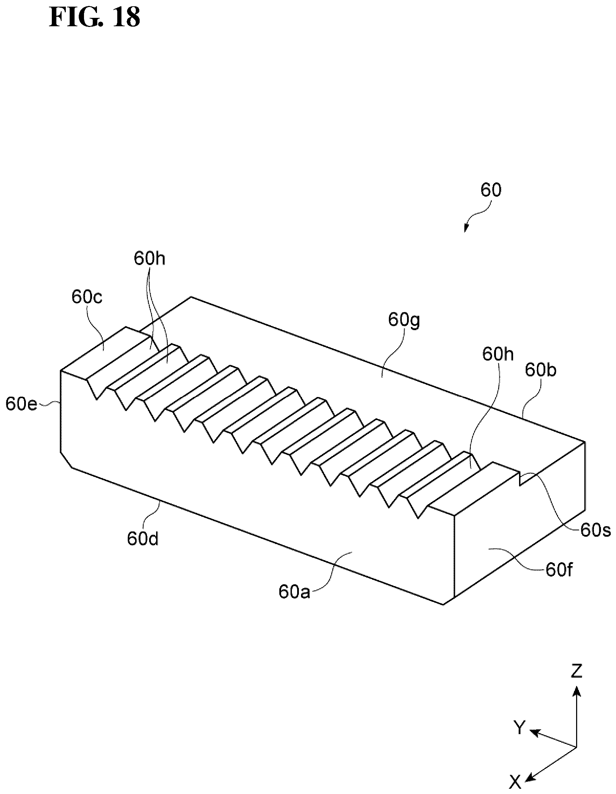

FIG. 17 is a cross-sectional view of an optical connector 1B according to a modification of a first embodiment. FIG. 18 is a perspective view of an optical-fiber holding member 60 provided in optical connector 1B. Optical connector 1B includes optical-fiber holding member 60 shown in FIG. 18 in addition to optical connector 1 according to the first embodiment. Optical-fiber holding member 60 is configured as a separate body from ferrule 20 and is disposed inside ferrule 20. Optical-fiber holding member 60 is made of a material such as resin or metal. Optical-fiber holding member 60 includes, for example, a front surface 60a, a rear surface 60b, an upper surface 60c, a lower surface 60d, a side surface 60e, and a side surface 60f.

Front surface 60a is an end surface positioned at the front end of optical-fiber holding member 60 in the X direction. Rear surface 60b is an end surface positioned at the rear end of optical-fiber holding member 60 in the X direction. Front surface 60a and rear surface 60b are, for example, planes along the YZ plane, and are arranged side by side along the X direction. Upper surface 60c is an end surface positioned at the upper end of optical-fiber holding member 60 in the Z direction. Lower surface 60d is an end surface positioned at the lower end of optical-fiber holding member 60 in the Z direction. Upper surface 60c and lower surface 60d are, for example, planes along the XY plane and are arranged side by side along the Z direction. Side surface 60e is an end surface positioned at one end of optical-fiber holding member 60 in the Y direction. Side surface 60f is an end surface positioned at the other end of optical-fiber holding member 60 in the Y direction. Side surface 60e and side surface 60f are, for example, planes along the XZ plane, and are arranged side by side along the Y direction.

Optical-fiber holding member 60 includes a fixation surface 60g for collectively fixing coated portions 13 of the plurality of optical fibers 10 at a portion close to rear surface 60b in the X direction. Fixation surface 60g is, for example, a plane along the XY plane, and forms a step with respect to upper surface 60c. Fixation surface 60g and upper surface 60c are connected to each other via a step surface 60s. Step surface 60s is, for example, a plane along the YZ plane, and is formed perpendicular to fixation surface 60g and upper surface 60c. Fixation surface 60g extends from step surface 60s to rear surface 60b in the X direction. Optical-fiber holding member 60 includes a plurality of V-shaped grooves 60h for holding coat removed portions 12 of the plurality of optical fibers 10, respectively, in a portion close to rear surface 60b in the X direction. The plurality of V-shaped grooves 60h are formed in upper surface 60c. The plurality of V-shaped grooves 60h extend in the X direction from front surface 60a to step surface 60s on upper surface 60c and are arranged along the Y direction.

As shown in FIG. 17, optical-fiber holding member 60 is disposed inside ferrule 20 from boot insertion hole 24 of ferrule 20. Optical-fiber holding member 60 is disposed between the plurality of fiber holding holes 25 and boot 30 at the inside of ferrule 20. For example, front surface 60a of optical-fiber holding member 60 is spaced apart from wall surface 26 in which the plurality of fiber holding holes 25 are formed. Rear surface 60b of optical-fiber holding member 60 is in contact with front surface 32 of boot 30. Optical-fiber holding member 60 holds the plurality of optical fibers 10 extending between wall surface 26 and front surface 32. The plurality of V-shaped grooves 60h of optical-fiber holding member 60 accommodate coat removed portions 12 of the plurality of optical fibers 10, respectively. Coated portions 13 of the plurality of optical fibers 10 are mounted on fixation surface 60g of optical-fiber holding member 60. A rectangular plate-shaped lid 61 is provided on the plurality of V-shaped grooves 60h to cover coated portions 13 of the plurality of optical fibers 10. Coat removed portion 12 and coated portion 13 are fixed to V-shaped groove 60h and fixation surface 60g, respectively, with an adhesive.

Even in such a form, the same effect as optical connector 1 according to the first embodiment can be obtained. That is, adhesive A can be prevented from flowing out to the outside of ferrule 20 by seal member 35, and thus, adhesive A leaking to the outside of ferrule 20 can be prevented from being cured in a state of being attached to optical fiber 10. As a result, it is possible to suppress a decrease in the bending resistance of optical fiber 10 due to the curing of leaked adhesive A. Further, when optical-fiber holding member 60 as described above is disposed inside ferrule 20, the insertion of the plurality of optical fibers 10 into ferrule 20 is facilitated. Further, optical-fiber holding member 60 has the plurality of V-shaped grooves 60h. In this case, by accommodating the plurality of optical fibers 10 in the plurality of V-shaped grooves 60h, respectively, and thus the positions and the rotation angles of the plurality of optical fibers 10 with respect to ferrule 20 can be defined with high accuracy.

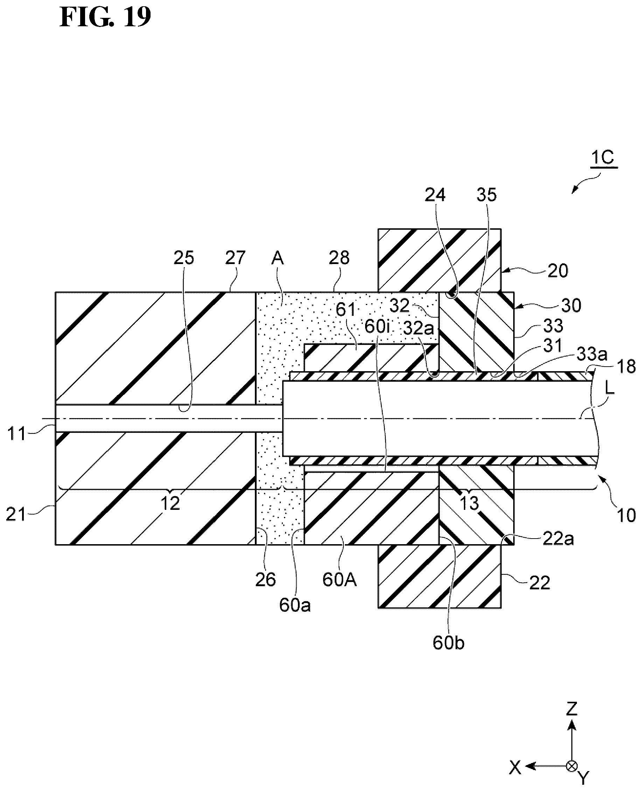

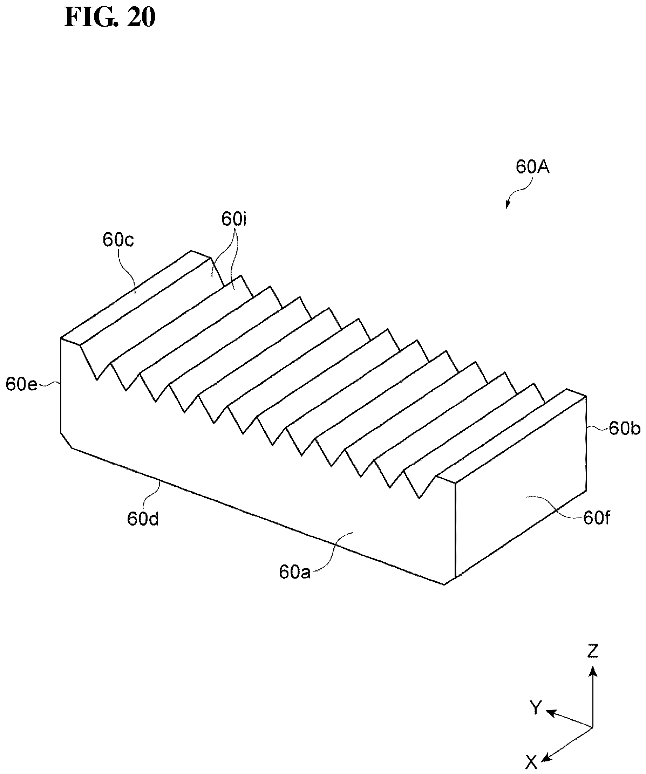

FIG. 19 is a cross-sectional view of an optical connector 1C according to another modification of the first embodiment. FIG. 20 is a perspective view of an optical-fiber holding member 60A provided in optical connector 1C. Optical connector 1C includes optical-fiber holding member 60A in FIG. 20 instead of optical-fiber holding member 60 of optical connector 1B. Optical-fiber holding member 60A does not have fixation surface 60g, unlike optical-fiber holding member 60. Upper surface 60c extends from front surface 60a toward rear surface 60b. A plurality of V-shaped grooves 60i formed in upper surface 60c extend from front surface 60a toward rear surface 60b. The plurality of V-shaped grooves 60i accommodate coated portions 13 of the plurality of optical fibers 10 extending between wall surface 26 and front surface 32 of boot 30. The rectangular plate-shaped lid 61 is provided on the plurality of V-shaped grooves 60i to cover coated portions 13 of the plurality of optical fibers 10. Even in such a form, the same effect as optical connector 1 according to the first embodiment can be obtained. Optical-fiber holding member 60A may have a plurality of V-shaped grooves that respectively accommodate coat removed portions 12 of the plurality of optical fibers 10 extending between wall surface 26 and front surface 32.

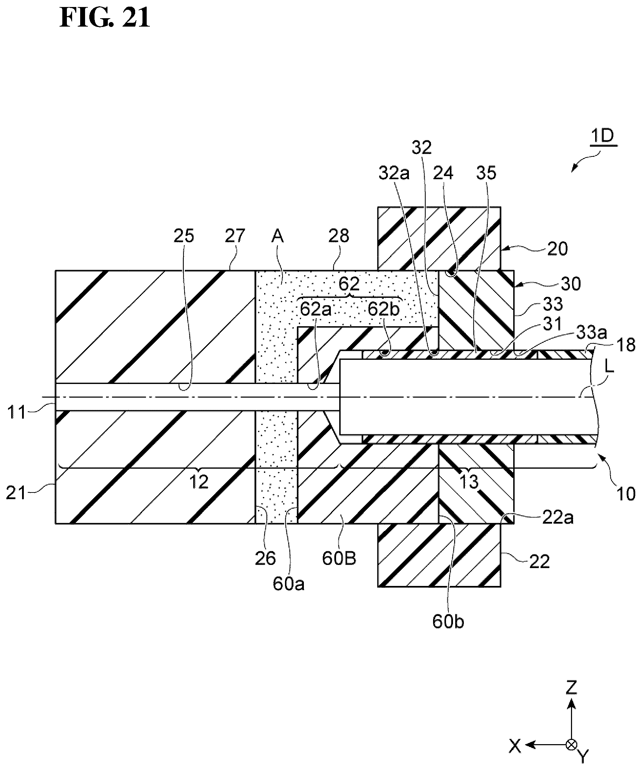

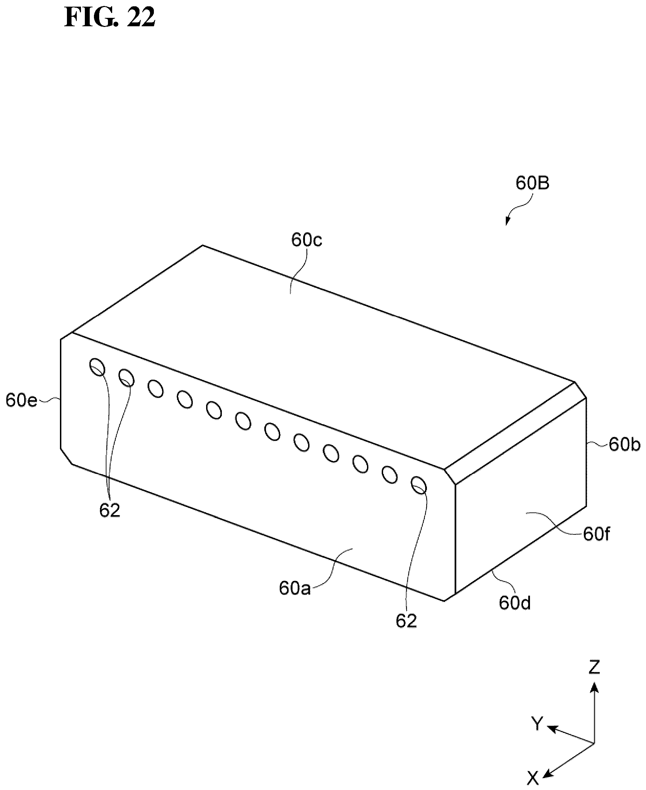

FIG. 21 is a cross-sectional view of an optical connector 1D according to another modification of the first embodiment. FIG. 22 is a perspective view showing an optical-fiber holding member 60B provided in optical connector 1D. Optical connector 1D includes optical-fiber holding member 60B in FIG. 22 instead of optical-fiber holding member 60 of optical connector 1B. Optical-fiber holding member 60B does not have fixation surface 60g, unlike optical-fiber holding member 60. Upper surface 60c extends from front surface 60a toward rear surface 60b. Optical-fiber holding member 60B includes a plurality of fiber through holes 62 instead of the plurality of V-shaped grooves 60h. The plurality of fiber through holes 62 extend through from front surface 60a toward rear surface 60b in the X direction and are arranged along the Y direction. The plurality of optical fibers 10 are inserted into the plurality of fiber through holes 62, respectively.

As shown in FIG. 22, each fiber through hole 62 has, for example, a small-diameter portion 62a and a large-diameter portion 62b. Coat removed portion 12 of optical fiber 10 extending between wall surface 26 and front surface 32 of boot 30 is inserted into small-diameter portion 62a. Large-diameter portion 62b has an inner diameter larger than the inner diameter of small-diameter portion 62a. Coated portion 13 of optical fiber 10 extending between wall surface 26 and front surface 32 of boot 30 is inserted into large-diameter portion 62b. Even in such a form, the same effect as optical connector 1 according to the first embodiment can be obtained. Further, when optical-fiber holding member 60B having the plurality of fiber through holes 62 is used, the plurality of optical fibers 10 are inserted into the plurality of fiber through holes 62, respectively, and thus the positions and the rotation angles of the plurality of optical fibers 10 with respect to ferrule 20 can be defined with high accuracy. Fiber through hole 62 may have only small-diameter portion 62a, and may hold only coat removed portion 12 by small-diameter portion 62a. Alternatively, fiber through hole 62 may have only large-diameter portion 62b, and only coated portion 13 may be held by large-diameter portion 62b.

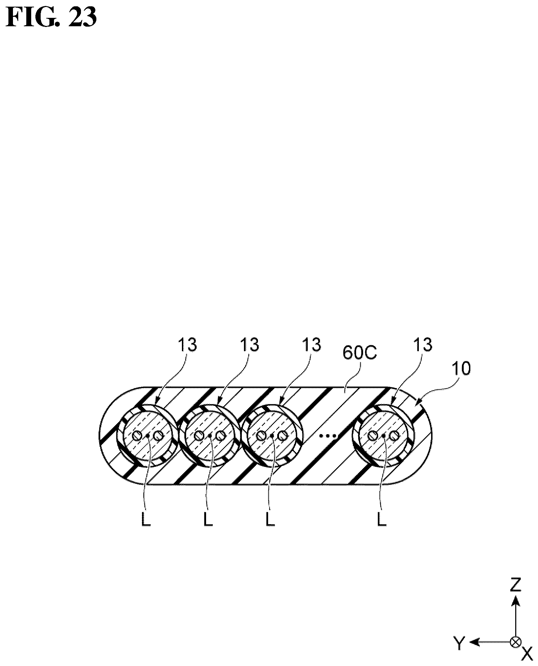

FIG. 23 is a cross-sectional view showing a modification of optical-fiber holding member 60. As shown in FIG. 23, an optical-fiber holding member 60C may be used as a modification of optical-fiber holding member 60. Optical-fiber holding member 60C is a resin layer that collectively covers coated portions 13 of the plurality of optical fibers 10 extending between wall surface 26 and front surface 32 of boot 30, that is, covers coated portions 13 of the plurality of optical fibers 10 so as to bundle coated portions 13 in a row. Optical-fiber holding member 60C integrally holds coated portions 13 of the plurality of optical fibers 10. Optical-fiber holding member 60C may be made of the same material as taping resin 18, for example. Even in such a form, the same effect as optical connector 1 according to the first embodiment can be obtained. Furthermore, coated portions 13 of the plurality of optical fibers 10 are covered by optical-fiber holding member 60C, and thus the bending resistance of each of optical fibers 10 can be obtained.

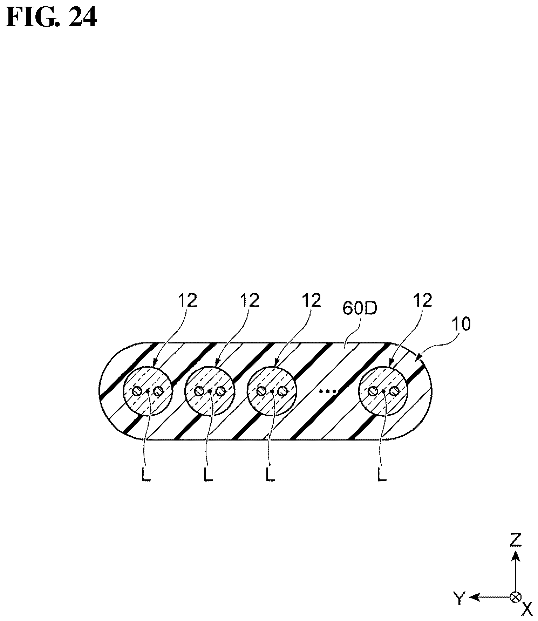

FIG. 24 is a cross-sectional view showing another modification of optical-fiber holding member 60. As shown in FIG. 24, an optical-fiber holding member 60D may be used as a modification of optical-fiber holding member 60. Optical-fiber holding member 60D is a resin layer that collectively covers coat removed portions 12 of the plurality of optical fibers 10 extending between wall surface 26 and front surface 32 of boot 30, that is, covers coat removed portions 12 of the plurality of optical fibers 10 so as to bundle coat removed portions 12 in a row. Optical-fiber holding member 60D integrally holds coat removed portions 12 of the plurality of optical fibers 10. Optical-fiber holding member 60D may be made of, for example, the same material as taping resin 18. Even in such a form, the same effect as optical connector 1 according to the first embodiment can be obtained. Furthermore, coat removed portions 12 of the plurality of optical fibers 10 are covered by optical-fiber holding member 60D, and thus the bending resistance of each optical fiber 10 can be obtained.

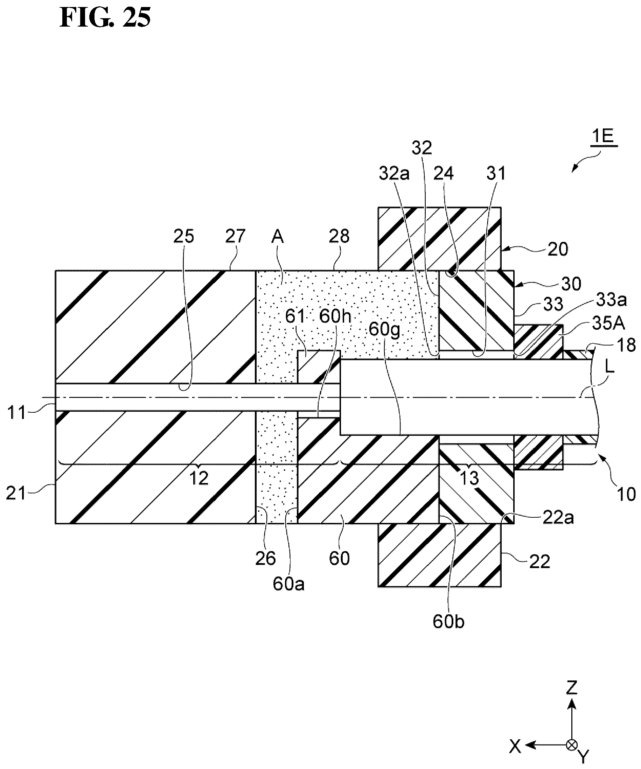

FIG. 25 is a cross-sectional view of an optical connector 1E according to a modification of the second embodiment. Optical connector 1E includes optical-fiber holding member 60 shown in FIG. 18 in addition to optical connector 1A according to the second embodiment. Optical-fiber holding member 60 is disposed between the plurality of fiber holding holes 25 and boot 30 inside ferrule 20, similarly to optical connector 1A. Optical-fiber holding member 60 holds the plurality of optical fibers 10 extending between wall surface 26 and front surface 32 of boot 30. The plurality of V-shaped grooves 60h of optical-fiber holding member 60 accommodate coat removed portions 12 of the plurality of optical fibers 10, respectively. Coated portions 13 of the plurality of optical fibers 10 are mounted on fixation surface 60g of optical-fiber holding member 60. In optical connector 1E, after the plurality of optical fibers 10 are inserted into ferrule 20 as described above, seal member 35A is formed to close opening 33a of rear surface 33 of boot 30.

Even in such a form, the same effect as optical connector 1A according to the second embodiment can be obtained. That is, adhesive A can be prevented from flowing out to the outside of ferrule 20 by seal member 35A, and thus, adhesive A leaking to the outside of ferrule 20 can be prevented from being cured in a state of being attached to optical fiber 10. As a result, it is possible to suppress a decrease in the bending resistance of optical fiber 10 due to the curing of leaked adhesive A. Furthermore, if seal member 35A is disposed to close opening 33a of rear surface 33 of boot 30, seal member 35A disposed so as to close the gap between the inner surface of through hole 31 and the plurality of optical fibers 10 can be easily formed by performing a simple operation of applying the material of seal member 35A to close opening 33a of rear surface 33 of boot 30. Optical connector 1E may include any one of optical-fiber holding members 60A, 60B, 60C, and 60D instead of optical-fiber holding member 60.

### REFERENCE SIGNS LIST

1, 1A, 1B, 1C, 1D, 1E optical connector
1a first optical connector
1b second optical connector
10 optical fiber
11 distal end surface
12 coat removed portion
13 coated portion
15 resin coat
16 cladding
17 core
18 taping resin
20 ferrule
21 front end surface
22 rear end surface
22a, 32a, 33a, 50a opening
23 guide hole
24 boot insertion hole
25 fiber holding hole
26 wall surface
27, 60c upper surface
28 window
30 boot
31 through hole
32, 60a front surface
33, 60b rear surface
35, 35A seal member
40 guide pin
50 spacer
60, 60A, 60B, 60C, 60D optical-fiber holding member
60d lower surface
60e 60f side surface
60g fixation surface
60s step surface
62a small-diameter portion
62b large-diameter portion
60h, 60i V-shaped groove
62 fiber through hole
100 optical coupling structure
A adhesive
L center axis
R internal space
T tape fiber

## Claims

1. An optical connector comprising:
a ferrule having a front end and a rear end facing each other in one direction, a boot insertion hole formed in the rear end, and a plurality of fiber holding holes each extending from the boot insertion hole toward the front end;
a boot having a through hole extending through the boot in the one direction, the boot being inserted into the boot insertion hole from the rear end; and
a plurality of optical fibers each including at least one of a core and a stress application portion at a position shifted from a center axis of the optical fiber, the plurality of optical fibers being inserted into the through hole in the one direction and each held in a corresponding one of the plurality of fiber holding holes,
wherein an adhesive disposed to fix the plurality of optical fibers to the ferrule is provided inside the ferrule between the boot and the front end, and
wherein the boot is provided with a seal member disposed such that the seal member closes a gap between an inner surface of the through hole and the plurality of optical fibers when viewed in the one direction.

2. The optical connector according to claim 1,
wherein the seal member is disposed inside the through hole, the seal member being disposed to cover the plurality of optical fibers.

3. The optical connector according to claim 1,
wherein the seal member is provided at a rear surface of the boot, the rear surface facing a side opposite to a side of the plurality of fiber holding holes in the one direction, the seal member being disposed to close an opening of the through hole formed in the rear surface.

4. The optical connector according to any one of claim 1 to claim 3,
wherein the seal member is made of a material differing from a material of the adhesive.

5. The optical connector according to any one of claim 1 to claim 4,
wherein each of the plurality of optical fibers includes a coated portion covered by a coat, and
wherein the coated portion of each of the plurality of optical fibers extends at an outside of the ferrule opposite to an inside of the ferrule with respect to the seal member in the one direction and is covered by a resin layer at the outside.

6. The optical connector according to any one of claim 1 to claim 5, further comprising:
an optical-fiber holding member disposed, inside the ferrule, between the boot and the plurality of fiber holding holes, the optical-fiber holding member being configured to hold the plurality of optical fibers.

7. The optical connector according to claim 6,
wherein each of the plurality of optical fibers includes a coated portion covered by a coat, and
wherein the optical-fiber holding member is a resin layer disposed to cover the coated portion of each of the plurality of optical fibers.

8. The optical connector according to claim 6,
wherein each of the plurality of optical fibers includes a coat removed portion from which a coat having a predetermined length from a distal end surface is removed, and
wherein the optical-fiber holding member is a resin layer disposed to cover the coat removed portion of each of the plurality of optical fibers.

9. The optical connector according to claim 6,
wherein the optical-fiber holding member has a plurality of V-shaped grooves each extending in the one direction, and
wherein a corresponding one of the plurality of optical fibers is accommodated in each of the plurality of V-shaped grooves.

10. The optical connector according to claim 6,
wherein the optical-fiber holding member has a plurality of fiber through holes each extending through the optical-fiber holding member in the one direction, and
wherein a corresponding one of the plurality of optical fibers is inserted into each of the plurality of fiber through holes.

11. The optical connector according to any one of claim 1 to claim 10,
wherein each of the optical fibers is any one of a multi core fiber, a polarization maintaining fiber, and a bundle fiber.

12. An optical coupling structure comprising:
as the optical connector according to any one of claim 1 to claim 11, a first optical connector and a second optical connector,
wherein the first optical connector is disposed to face the second optical connector in the one direction and is optically coupled to the second optical connector.

13. A method of manufacturing an optical connector, the method comprising:
preparing a ferrule, a boot, and a plurality of optical fibers, the ferrule having a front end and a rear end facing each other in one direction, a boot insertion hole formed in the rear end, and a plurality of fiber holding holes each extending from the boot insertion hole toward the front end, the boot having a through hole extending through the boot in the one direction, the boot being inserted into the boot insertion hole from the rear end, the plurality of optical fibers each including at least one of a core and a stress application portion at a position shifted from a center axis of the optical fiber;
inserting the plurality of optical fibers into the ferrule such that the plurality of optical fibers are inserted into the through hole and are each held in a corresponding one of the plurality of fiber holding holes;
forming a seal member disposed such that the seal member closes a gap between an inner surface of the through hole and the plurality of optical fibers when viewed in the one direction; and
fixing the plurality of optical fibers to the ferrule by injecting an adhesive into the ferrule between the boot and the front end, the adhesive being disposed to fix the plurality of optical fibers to the ferrule.

14. The method of manufacturing the optical connector according to claim 13,
wherein inserting of the plurality of optical fibers into the ferrule is performed after forming of the seal member and before fixing of the plurality of optical fibers to the ferrule,
wherein, in forming of the seal member, the seal member disposed to cover the plurality of optical fibers is formed, and
wherein, in inserting of the plurality of optical fibers into the ferrule, the seal member is disposed inside the through hole when the plurality of optical fibers are to be inserted into the through hole.

15. The method of manufacturing the optical connector according to claim 13,
wherein forming of the seal member is performed after inserting of the plurality of optical fibers into the ferrule and before fixing of the plurality of optical fibers to the ferrule, and
wherein, in forming of the seal member,
after the plurality of optical fibers are inserted into the through hole, the seal member is formed with respect to a rear surface of the boot such that the seal member closes an opening of the through hole formed in the rear surface, the rear surface facing a side opposite to a side of the plurality of fiber holding holes in the one direction.
